# EUROPÄISCHE PATENTSCHRIFT

(11) **EP 2 852 506 B1**
(45) Veröffentlichungstag und Bekanntmachung des Hinweises auf die Patenterteilung: **09.10.2019**
(21) Anmeldenummer: 13717271.4
(22) Anmeldetag: 17.04.2013
(51) Int. Cl.: B60Q 3/00

(54) **VORRICHTUNG ZUR STEUERUNG EINER BELEUCHTUNG IN EINEM FAHRZEUGINNENRAUM**
DEVICE FOR CONTROLLING LIGHTING IN A VEHICLE INTERIOR
DISPOSITIF DE COMMANDE D'UN ÉCLAIRAGE DANS UN ESPACE INTÉRIEUR DE VÉHICULE

(30) Priorität: 23.05.2012 DE 102012010044
(43) Veröffentlichungstag der Anmeldung: 01.04.2015
(73) Patentinhaber: Volkswagen Aktiengesellschaft, 38440 Wolfsburg (DE)
(72) Erfinder: SIEGEL, Ralf, 01097 Dresden (DE); RIEGER, Carsten, 38268 Lengede (DE); GERLACH, Simon, 30161 Hannover (DE)
(86) Internationale Anmeldenummer: PCT/EP2013/058003
(87) Internationale Veröffentlichungsnummer: WO 2013/174580

(56) Entgegenhaltungen:
- US-A1- 2005 024 342
- US-A1- 2005 280 524
- US-B1- 7 084 859

## Beschreibung

### Technisches Gebiet

Die Erfindung betrifft Beleuchtungseinrichtungen für Fahrzeuginnenräume, insbesondere eine Vorrichtung zum Steuern einer Beleuchtung in einem Fahrzeuginnenraum.

### Stand der Technik

Eine Fahrzeuginnenraumbeleuchtung weist in der Regel mehrere Leuchtquellen auf, die über einen direkt an der Leuchtquelle angeordneten Schalter und/oder über einen Türöffnungsschalter schaltbar sind, um beim Öffnen einer Fahrzeugtür den Innenraum des Fahrzeugs auszuleuchten. Während der Fahrt ist es häufig wünschenswert, dass die Beleuchtung vollständig ausgeschaltet ist, um den Fahrer nicht vom Verkehrsgeschehen abzulenken oder in sonstiger Weise zu blenden.

Aus Komfortgründen kann es wünschenswert sein, auch während der Fahrt im Fahrzeuginnenraum eine gedämpfte Beleuchtung vorzusehen. Die gedämpfte Beleuchtung soll für die Fahrzeuginsassen den Beleuchtungsunterschied zwischen außerhalb des Fahrzeugs befindlichen Leuchtquellen, wie beispielsweise Scheinwerfern von entgegenkommenden Fahrzeugen, und der im Fahrzeuginnenraum vorherrschenden Beleuchtung abmildern und somit eine für die Augen verträglichere Umgebung schaffen. Trotzdem soll der Fahrer des Kraftfahrzeugs nicht durch die Fahrzeuginnenraumbeleuchtung geblendet oder in sonstiger Weise in seiner optischen Wahrnehmung der Fahrzeugumgebung beeinträchtigt werden. Ferner kann mithilfe der Beleuchtung auch ein gewünschtes "Ambiente" und Raumgefühl geschaffen werden, um einen angenehmeren Aufenthalt im Fahrgastinnenraum zu erreichen.

Um dies zu erreichen, kann es notwendig sein, die Fahrzeuginnenraumbeleuchtung individuell einzustellen.

Allgemein ist aus der Gebäudesystemtechnik ein Anzeige- und Bediengerät bekannt, das verschiedene elektrische Geräte über ein Touchscreen-Element ansteuern kann. Auf dem Touchscreen-Element sind anzusteuernde elektrische Geräte dargestellt, die durch Berührung zum Ausführen einer bestimmten Funktion angesteuert werden können (EP 1 881 649 A2).

Auch aus der Druckschrift DE 10 2004 030 884 A1 ist eine haustechnische Anlage mit ansteuerbaren elektrischen Verbrauchern bekannt, die über einen Personal Digital Assistant zum Durchführen einer gewünschten Funktion angesteuert werden können.

Die US 2005/024342 A1 offenbart den Oberbegriff des Anspruchs 1.

Es ist Aufgabe der vorliegenden Erfindung, das Einstellen einer Fahrzeuginnenraumbeleuchtung in möglichst komfortabler Weise ausführen zu können.

### Offenbarung der Erfindung

Diese Aufgabe wird durch die Bedieneinrichtung zum individuellen Steuern einer Innenraumbeleuchtung eines Kraftfahrzeugs gemäß Anspruch 1 sowie ein Beleuchtungssystem gemäß dem nebengeordneten Anspruch gelöst.

Weitere vorteilhafte Ausgestaltungen der vorliegenden Erfindung sind in den abhängigen Ansprüchen angegeben.

Ein ersten Aspekt ist eine Beleuchtungsbedieneinrichtung gemäß Anspruch 1.

Eine Idee der obigen Vorrichtung besteht darin, einem Fahrzeuginsassen eine Möglichkeit zu geben, die Beleuchtungsstärke von mehreren Beleuchtungsquellen so aufeinander abzustimmen, dass eine angenehme Hintergrundbeleuchtung im Innenraum des Kraftfahrzeugs gewährleistet ist. Dazu erhält ein Bediener durch die Eingabe- und Anzeigevorrichtung die Möglichkeit, über eine grafische Oberfläche, die den Innenraum des Kraftfahrzeugs schematisch abbildet und den Ort der Beleuchtungsquellen angibt, die Beleuchtungsstärke jeder der Beleuchtungsquellen separat einzustellen. Dadurch ist es möglich, eine individuelle Hintergrundbeleuchtung im Fahrzeuginnenraum von einer einzigen Position, d. h. mithilfe einer einzigen Bedieneinrichtung, im Fahrzeuginnenraum einzustellen. Dies ist komfortabel, da ansonsten die Beleuchtungsquellen nur dezentral geschaltet bzw. eingestellt werden können.

Weiterhin kann die Eingabe- und Anzeigeeinrichtung ausgebildet sein, um eine Darstellung des Fahrgastinnenraums mit den Beleuchtungsquellen auszugeben, wobei die Beleuchtungsstärke jeder der Beleuchtungsquellen dargestellt wird.

Gemäß einer Ausführungsform kann die Eingabe- und Anzeigeeinrichtung ausgebildet sein, um die Beleuchtungsstärken der Beleuchtungsquellen jeweils durch eine Aura um ein der betreffenden Beleuchtungsquelle zugeordnetes Beleuchtungsquellensymbol darzustellen, wobei die jeweilige Beleuchtungsstärke durch die Breite und/oder durch die Helligkeit der Aura angegeben wird.

Alternativ oder zusätzlich kann die Eingabe- und Anzeigeeinrichtung ausgebildet sein, um die Beleuchtungsstärken der Beleuchtungsquellen jeweils durch ein der betreffenden Beleuchtungsquelle zugeordnetes Beleuchtungsfeld darzustellen, wobei die jeweilige Beleuchtungsstärke durch eine entsprechende Größe des Beleuchtungsfelds und/oder durch eine entsprechende Helligkeit des Beleuchtungsfelds und/oder durch eine entsprechende Aufhellung eines dargestellten Hintergrunds in dem Beleuchtungsfeld und/oder durch eine entsprechende Farbigkeit des Beleuchtungsfelds angegeben wird.

Insbesondere können die Einstellelemente die jeweiligen Beleuchtungsquellensymbole zumindest teilweise kreisförmig, kreissegmentförmig bzw. halbkreisförmig oder bogenförmig umgeben.

Die Eingabe- und Anzeigeeinrichtung kann separat von der Bedieneinrichtung ausgebildet sein und insbesondere in einem Tablet-PC, Mobiltelefon oder Personal Digital Assistant vorgesehen sein.

Gemäß einem weiteren Aspekt ist ein Beleuchtungssystem für einen Innenraum eines Kraftfahrzeugs vorgesehen. Das Beleuchtungssystem umfasst:
- mehrere Beleuchtungsquellen; und
- die obige Bedieneinrichtung.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung einer Draufsicht auf ein Kraftfahrzeug mit mehreren Beleuchtungsquellen und einer Bedieneinrichtung;
- Figur 2: eine Darstellung einer Anzeige einer Eingabe- und Anzeigeeinrichtung der Bedieneinrichtung der Figur 1;
- Figur 3: eine weitere Darstellung einer Anzeige einer Eingabe- und Anzeigeeinrichtung zum Einsatz in der Bedieneinrichtung der Figur 1; und
- Figur 4: eine weitere Darstellung einer Anzeige einer Eingabe- und Anzeigeeinrichtung zur Darstellung auf der Bedieneinrichtung der Figur 1.

### Beschreibung von Ausführungsformen

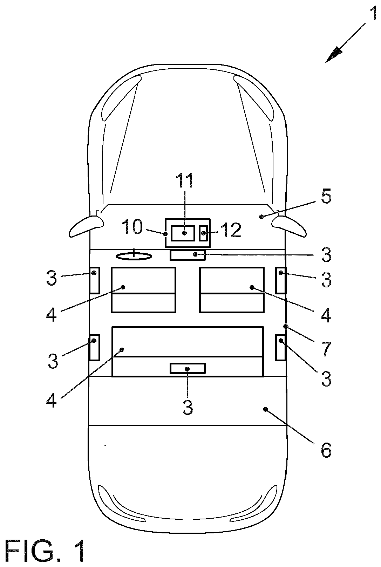

Figur 1 zeigt eine schematische Darstellung eines Kraftfahrzeugs 1 in einer Draufsicht ohne Dach, so dass ein Fahrzeuginnenraum 2 des Kraftfahrzeugs 1 einschließlich der Positionen der Beleuchtungsquellen 3 dargestellt wird. Die Beleuchtungsquellen 3 können im Fahrzeugdach und/oder in einer oder mehreren Säulen integriert sein.

Im Fahrzeuginnenraum 2 befinden sich Fahrgastsitze 4 in der üblichen Anordnung. Beleuchtungsquellen 3 können seitlich der Fahrgastsitze 4 über den Seitentüren (nicht gezeigt) sowohl für eine vordere Sitzreihe als auch für eine hintere Sitzreihe angeordnet sein. Zudem können mittig entlang der Längsachse des Kraftfahrzeugs 1 vorne, d. h. nahe einer Oberkante der Windschutzscheibe 5 und nahe einer Oberkante einer Heckscheibe 6, Beleuchtungsquellen 3 angeordnet sein.

Die Beleuchtungsquellen 3 können separat durch jeweilige Schalter (nicht gezeigt) ein- und ausgeschaltet und zudem an einen Öffnungszustand einer Fahrzeugtür 7 gekoppelt werden, so dass beim Öffnen einer Fahrzeugtür 7 die entsprechende Beleuchtungsquelle 3 aktiviert, d. h. eingeschaltet, wird und beim Schließen der Fahrzeugtür 7 diese entsprechend deaktiviert, d. h. ausgeschaltet, wird.

Weiterhin können bekannte Dimmfunktionen realisiert sein, um ein hartes Ein- und Ausschalten der Beleuchtungsquellen 3 zu vermeiden, so dass beispielsweise bei einem Schließen einer Fahrzeugtür 7 die Beleuchtungsstärke einer betreffenden Beleuchtungsquelle 3 heruntergedimmt wird, bis diese vollständig ausgeschaltet ist.

Im Bedienbereich des Fahrers oder eines sonstigen Insassen , d.h. im Cockpit oder in einem Bereich der Rückbank des Fahrzeugs, befindet sich eine Bedieneinrichtung 10, die mit den Beleuchtungsquellen 3 verbunden ist, um individuell die Beleuchtungsstärke jeder der Beleuchtungsquellen 3 zu steuern. Dies kann zum einen direkt durch Vorgeben einer jeder der Beleuchtungsquellen 3 bereitzustellenden elektrischen Leistung erfolgen, indem eine elektrische Verbindungsleitung von der Bedieneinrichtung 10 zu jeder der Beleuchtungsquellen 3 geführt wird.

Alternativ können die Beleuchtungsquellen 3 über ein Bussystem mit der Bedieneinrichtung 10 verbunden sein, um ein Befehlssignal, das eine Angabe über eine Beleuchtungsstärke bzw. eine elektrische Leistung bereitstellt, an eine betreffende Beleuchtungsquelle 3 zu übermitteln. Auf diese Weise kann durch eine entsprechende Steuereinheit (nicht gezeigt), die in jeder der Beleuchtungsquellen 3 vorgesehen ist, das Befehlssignal in eine entsprechende Ansteuerung zum Bereitstellen einer entsprechenden Beleuchtungsstärke der betreffenden Beleuchtungsquelle 3 umgesetzt werden.

Die Bedieneinrichtung 10 weist eine Eingabe- und Anzeigeeinrichtung 11 auf, die vorzugsweise als Touchscreen ausgebildet ist. Die Eingabe- und Anzeigeeinrichtung 11 dient zur Anzeige und Darstellung der Beleuchtungssituation in dem Fahrgastinnenraum 2 und ermöglicht weiterhin, durch Berührung und Fingergesten auf der Eingabe- und Anzeigeeinrichtung 11 Einstellungen der Beleuchtungssituation im Fahrzeuginnenraum 2 vorzunehmen. Dazu stellt die Bedieneinrichtung 10 die aktuellen Einstellungen der Beleuchtungsquellen 3 in geeigneter Weise der Eingabe- und Anzeigeeinrichtung 11 bereit.

Weiterhin ist denkbar, Beleuchtungsszenarien, die jeder Beleuchtungsquelle 3 eine bestimmte Beleuchtungsstärke zuordnet, abzuspeichern und bei Bedarf abzurufen. Ein solches vordefiniertes Szenario kann durch eine entsprechende Benutzereingabe oder beim Öffnen einer Fahrzeugtür aktiviert werden. Alternativ ist es auch denkbar, ein solches vordefiniertes Beleuchtungsszenario über Sprachbedienung auszuwählen, wie z.B. durch Aussprechen von "Leselicht ein".

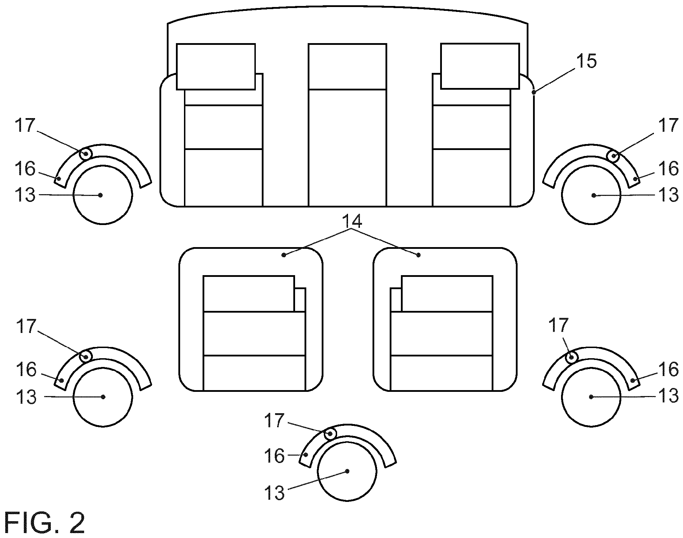

Zur individuellen Einstellung der Beleuchtung können folgende in den Figuren 2 bis 4 dargestellte Varianten vorgesehen sein.

Die Bedieneinrichtung 10 weist eine Steuereinheit 12 auf, die die obigen über die Eingabe- und Anzeigeeinrichtung 11 ausgewählten Beleuchtungsquellen 3 in entsprechender Weise ansteuert, um deren Beleuchtungsstärke einzustellen.

Figur 2 zeigt eine Darstellung des Fahrzeuginnenraums 2 mit Vordersitzsymbolen 14 und einem Rücksitzsymbol 15. Die Beleuchtungsquellen 3 sind mithilfe von Beleuchtungsquellensymbolen 13 auf der Eingabe- und Anzeigeeinrichtung an ihrer Position relativ zu den Vordersitzsymbolen 14 und dem Rücksitzsymbol 15 dargestellt. Die Beleuchtungsquellensymbole 13 werden als runde, hell dargestellte Flächen vorgesehen. Die Beleuchtungsquellensymbole 13 sind von einem kreisförmigen, kreissegmentförmigen bzw. halbkreisförmigen oder bogenförmigen Einstellelement 16 umgeben, auf dem ein Zeigerelement 17, beispielsweise als punktförmiges bzw. kreisförmiges Element, angeordnet ist. Das Zeigerelement 17 kann farblich so ausgestaltet sein, dass es sich von der Farbe des Einzelelements 16 abhebt. Die Position des Zeigerelements 17 auf dem Einstellelement 16 gibt die aktuelle Beleuchtungsstärke der jeweiligen Beleuchtungsquelle 3 an.

Das Einstellen der Beleuchtungsquelle 3 kann durchgeführt werden, indem zunächst die einzustellende Beleuchtungsquelle 3 durch Antippen des entsprechenden Beleuchtungsquellensymbols 13 auf der Eingabe- und Anzeigeeinrichtung 11 ausgewählt wird. Anschließend kann die Beleuchtungsstärke der zuvor ausgewählten Beleuchtungsquelle 3 durch Berührung des Zeigerelements 17 und Verschieben des Zeigerelements 17 durch Verschieben des Fingers auf der Oberfläche der Eingabe- und Anzeigeeinrichtung 11 entlang des Einstellelements 16 eingestellt werden. Das Bedienelement 10 steuert dann die betreffende Beleuchtungsquelle 3 so an, dass eine der Position des Zeigerelements 17 auf dem Einstellelement 16 entsprechende Beleuchtungsstärke eingestellt wird. Alternativ kann auf die vorherige Auswahl des entsprechenden Beleuchtungsquellensymbols 13 durch Antippen verzichtet werden.

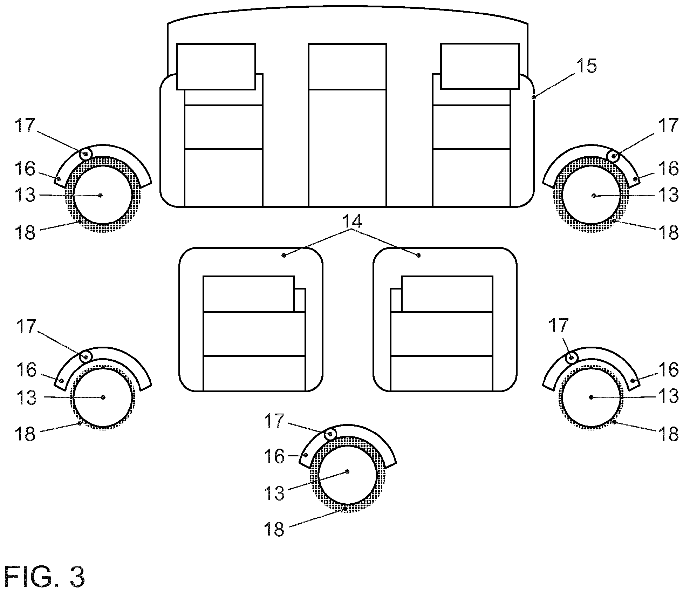

Zusätzlich zu der Darstellung der Beleuchtungsstärke durch die Position des Zeigerelements 17 kann die Helligkeit der Darstellung des jeweiligen Beleuchtungsquellensymbols 13 variiert werden. Zudem kann das Beleuchtungsquellensymbol 13, wie in Figur 3 dargestellt, mit einer Aura 18 versehen werden, die umso heller dargestellt wird, je heller die Beleuchtungsstärke der dem Beleuchtungsquellensymbol 13 zugeordneten Beleuchtungsquelle 3 ist. Die Aura 18 um das Beleuchtungsquellensymbol 13 kann dieses umgeben und alternativ oder zusätzlich eine Breite aufweisen, die von der Beleuchtungsstärke der betreffenden Beleuchtungsquelle 3 abhängt.

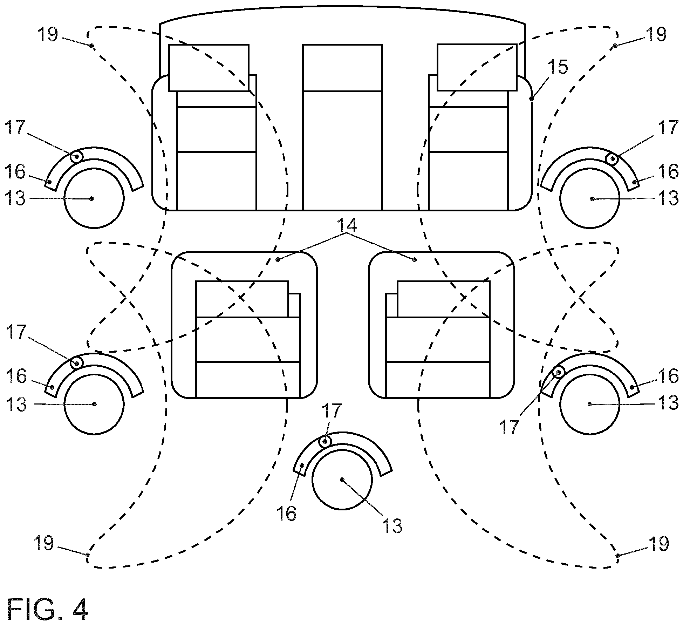

Alternativ oder zusätzlich kann, wie in Figur 4 dargestellt, vorgesehen sein, dass die Beleuchtungsstärke durch schematisch in der Darstellung des Fahrzeuginnenraums 2 überlagerte und von jedem Beleuchtungsquellensymbole 13 ausgehende Beleuchtungsfelder 19 dargestellt wird. Die Beleuchtungsfelder 19 werden im Wesentlichen als sichelförmiger Bereich, z. B. in Form eines Kreissegments mit einem Außenradius und einem Innenradius, dargestellt, wobei der Außenradius von der Beleuchtungsstärke der betreffenden Beleuchtungsquelle 3 abhängt und der Innenradius konstant bleiben kann.

Im Inneren der Beleuchtungsfelder 19 kann die Darstellung des durch das betreffende Beleuchtungsfeld 19 überlagerten Bereichs des Fahrzeuginnenraums 2 heller bzw. eingefärbt angezeigt werden als in den übrigen (nicht durch Beleuchtungsfelder überlagerten) Bereichen. Das Maß, um das der entsprechende durch das entsprechende Beleuchtungsfeld 19 überlagerte Bereich des Fahrzeuginnenraums 2 heller bzw. eingefärbt dargestellt wird, kann ebenfalls von der eingestellten Beleuchtungsstärke der betreffenden Beleuchtungsquelle 3 abhängen. Somit kann die Größe des dargestellten Beleuchtungsbereichs und/oder dessen Helligkeit und/oder dessen aufhellende Wirkung für die Darstellung des Fahrzeuginnenraums 2 und/oder Einfärbung von der Beleuchtungsstärke der betreffenden Beleuchtungsquelle 3 abhängen.

In der oben beschriebenen Ausführungsform befindet sich die Eingabe- und Anzeigeeinrichtung 11 fest montiert in der Konsole oder in einem für die Insassen zugänglichen Bereich des Kraftfahrzeugs 1. Es kann jedoch auch vorgesehen sein, dass sich die Bedieneinrichtung 10 in drahtloser Kommunikationsverbindung mit einem Eingabegerät befindet, das beispielsweise als Personal Digital Assistant (PDA) oder als Tablet-Computer oder dergleichen ausgebildet sein kann. Der PDA bzw. Tablet-Computer ersetzt dann die Eingabe- und Anzeigeeinrichtung 11 und es kann nun an jeder Position im Fahrzeuginnenraum 2 eine Einstellung der Hintergrundbeleuchtung durch individuelles Einstellen der Beleuchtungsstärken der Beleuchtungsquellen 3 vorgenommen werden.

### Bezugszeichenliste

- 1: Fahrzeug
- 2: Fahrzeuginnenraum
- 3: Beleuchtungsquelle
- 4: Fahrzeugsitz
- 5: Windschutzscheibe
- 6: Heckscheibe
- 10: Bedieneinrichtung
- 11: Eingabe- und Anzeigeeinrichtung
- 12: Steuereinheit
- 13: Beleuchtungsquellensymbol
- 14: Vordersitzsymbol
- 15: Rücksitzsymbol
- 16: Einstellelement
- 17: Zeigerelement
- 18: Aura
- 19: Beleuchtungsfeld

## Patentansprüche

1. Beleuchtungsbedieneinrichtung (10) zum Steuern einer Innenraumbeleuchtung für einen Fahrgastinnenraum (2) eines Kraftfahrzeugs (1) mit mehreren Beleuchtungsquellen (3), umfassend:
- eine Eingabe- und Anzeigeeinrichtung (11), durch die der Fahrgastinnenraum (2) darstellbar ist und die Beleuchtungsstärken jeder der mehreren Beleuchtungsquellen (3) einstellbar sind;
- eine Steuereinheit (12), die ausgebildet ist, um abhängig von einer Eingabe auf der Eingabe- und Anzeigeeinrichtung (11) ein entsprechendes Steuersignal und/oder eine entsprechende elektrische Leistung bereitzustellen, durch welche die Beleuchtungsstärke der einzustellenden Beleuchtungsquelle (3) einstellbar ist,
**dadurch gekennzeichnet, dass**
die Eingabe- und Anzeigeeinrichtung (11) so ausgebildet ist, dass
- die Anordnung der mehreren Beleuchtungsquellen (3) darstellbar ist,
- gleichzeitig zu Beleuchtungsquellensymbolen (13), die jeder der Beleuchtungsquellen (3) zugeordnet sind, ein Einstellelement (16) anzeigbar ist, mit dem die Beleuchtungsstärke der betreffenden Beleuchtungsquelle (3) einstellbar ist, und
- auf jedem der Einstellelemente (16) ein Zeigerelement (17) darstellbar ist, dessen Position auf dem Einstellelement (16) verschiebbar ist, um die Beleuchtungsstärke der betreffenden Beleuchtungsquelle (3) einzustellen.

2. Beleuchtungsbedieneinrichtung (10) nach Anspruch 1, wobei die Eingabe- und Anzeigeeinrichtung (11) ausgebildet ist, um eine Darstellung des Fahrgastinnenraums (2) mit den Beleuchtungsquellen (3) auszugeben, wobei die Beleuchtungsstärke jeder der Beleuchtungsquellen (3) dargestellt wird.

3. Beleuchtungsbedieneinrichtung (10) nach Anspruch 2, wobei die Eingabe- und Anzeigeeinrichtung (11) ausgebildet ist, um die Beleuchtungsstärken der Beleuchtungsquellen (3) jeweils durch eine Aura (18) um ein der betreffenden Beleuchtungsquelle (3) zugeordnetes Beleuchtungsquellensymbol (13) darzustellen, wobei die jeweilige Beleuchtungsstärke durch die Breite und/oder durch die Helligkeit der Aura (18) angegeben wird.

4. Beleuchtungsbedieneinrichtung (10) nach Anspruch 2 oder 3, wobei die Eingabe- und Anzeigeeinrichtung (11) ausgebildet ist, um die Beleuchtungsstärken der Beleuchtungsquellen (3) jeweils durch ein der betreffenden Beleuchtungsquelle (3) zugeordnetes Beleuchtungsfeld (19) darzustellen, wobei die jeweilige Beleuchtungsstärke durch eine entsprechende Größe des Beleuchtungsfelds (19) und/oder durch eine entsprechende Helligkeit des Beleuchtungsfelds (19) und/oder durch eine entsprechende Aufhellung eines dargestellten Hintergrunds in dem Beleuchtungsfeld (19) und/oder durch eine entsprechende Farbigkeit des Beleuchtungsfelds (19) angegeben wird.

5. Beleuchtungsbedieneinrichtung (10) nach einem der Ansprüche 1 bis 4, wobei die Einstellelemente (16) die jeweiligen Beleuchtungsquellensymbole (13) zumindest teilweise kreisförmig, kreissegmentförmig bzw. halbkreisförmig oder bogenförmig umgeben.

6. Beleuchtungsbedieneinrichtung (10) nach einem der Ansprüche 1 bis 5, wobei die Eingabe- und Anzeigeeinrichtung (11) separat von der Bedieneinrichtung (10) ausgebildet ist und insbesondere in einem Tablet-PC, Mobiltelefon oder Personal Digital Assistant vorgesehen ist.

7. Beleuchtungssystem für einen Fahrgastinnenraum (2) eines Kraftfahrzeugs (1), umfassend:
- mehrere Beleuchtungsquellen (3);
- eine Beleuchtungsbedieneinrichtung (10) nach einem der Ansprüche 1 bis 6.

## Claims

1. A lighting operating device (10) for controlling an interior lighting for a passenger compartment (2) of a motor vehicle (1) with a plurality of lighting sources (3), comprising:
- an input and display device (11), by which the passenger compartment (2) can be displayed and the lighting levels of each of the plurality of lighting sources (3) can be adjusted;
- a control unit (12), which is designed to provide a corresponding control signal and/or a corresponding electric power output by which the lighting level of a lighting source (3) to be adjusted can be adjusted, on the basis of an input to the input and display device (11),
**characterized in that**
the input and display device (11) is designed so that
- the arrangement of the plurality of lighting sources (3) can be displayed,
- at the same time as lighting source symbols (13), which are associated with each of the lighting sources (3), an adjusting element (16) can be displayed, with which the lighting level of the relevant lighting source (3) can be adjusted, and
- on each of the adjusting elements (16) a pointer element (17) can be displayed, the position of which on the adjusting element (16) can be displaced, in order to adjust the lighting level of the relevant lighting source (3).

2. The lighting operating device (10) according to Claim 1, wherein the input and display device (11) is designed, in order to output a representation of the passenger compartment (2) with the lighting sources (3), wherein the lighting level of each of the lighting sources (3) is displayed.

3. The lighting operating device (10) according to Claim 2, wherein the input and display device (11) is designed, in order to display the lighting levels of the lighting sources (3) in each case by an aura (18) around a lighting source symbol (13) associated with the relevant lighting source (3), wherein the respective lighting level is indicated by the width and/or by the brightness of the aura (18).

4. The lighting operating device (10) according to Claim 2 or 3, wherein the input and display device (11) is designed, in order to display the lighting levels of the lighting sources (3) in each case by a lighting field (19) associated with the relevant lighting source (3), wherein the respective lighting level is indicated by a corresponding size of the lighting field (19) and/or by a corresponding brightness of the lighting field (19) and/or by a corresponding brightening of a displayed background in the lighting field (19) and/or by a corresponding coloration of the lighting field (19).

5. The lighting operating device (10) according to any one of Claims 1 to 4, wherein the adjusting element (16) surrounds the respective lighting source symbols (13) at least partially circularly, in the form of a circle segment or semi-circularly or arc-shaped.

6. The lighting operating device (10) according to any one of Claims 1 to 5, wherein the input and display device (11) is designed separately from the operating device (10) and in particular is provided in a tablet PC, mobile telephone or personal digital assistant.

7. A lighting system for a passenger compartment (2) of a motor vehicle (1), comprising:
- a plurality of lighting sources (3);
- a lighting operating device (10) according to any one of Claims 1 to 6.

## Revendications

1. Dispositif de commande d'éclairage (10) pour le contrôle de l'éclairage d'une pièce intérieure pour un habitacle de passager (2) d'un véhicule automobile (1) avec plusieurs sources d'éclairage (3), comprenant :
- un dispositif d'entrée et d'affichage (11) par l'intermédiaire duquel l'habitacle de passager (2) peut être représenté et les intensités d'éclairage de chacune des plusieurs sources d'éclairage (3) peuvent être réglées ;
- une unité de commande (12) qui est conçue pour générer, indépendamment d'une entrée sur le dispositif d'entrée et d'affichage (11), un signal de commande correspondant et/ou une puissance électrique correspondante, par l'intermédiaire de laquelle l'intensité d'éclairage de la source d'éclairage (3) à régler peut être réglée,
**caractérisé en ce que**
le dispositif d'entrée et d'affichage (11) est conçu de façon à ce que
- la disposition des plusieurs sources d'éclairage (3) puisse être représentée
- en même temps que des symboles de sources d'éclairage (13), qui correspondent à chacune des sources d'éclairage (3), un élément de réglage (16) puisse être affiché, avec lequel l'intensité d'éclairage de la source d'éclairage (3) correspondante peut être réglée et
- sur chacun des éléments de réglage (16), un élément à aiguille (17) puisse être représenté, dont la position sur l'élément de réglage (16) peut être déplacée afin de régler l'intensité d'éclairage de la source d'éclairage (3) correspondante.

2. Dispositif de commande d'éclairage (10) selon la revendication 1, le dispositif d'entrée et d'affichage (11) étant conçu pour générer une représentation de l'habitacle du passager (2) avec les sources d'éclairage (3), l'intensité d'éclairage de chacune des sources d'éclairage (3) étant représentée.

3. Dispositif de commande d'éclairage (10) selon la revendication 2, le dispositif d'entrée et d'affichage (11) étant conçu pour représenter les intensités d'éclairage des sources d'éclairage (3) chacune par une aura (18) autour d'un symbole de source d'éclairage (13) correspondant à la source d'éclairage (3) concernée, l'intensité d'éclairage étant indiquée par la largeur et/ou la luminosité de l'aura (18).

4. Dispositif de commande d'éclairage (10) selon la revendication 2 ou 3, le dispositif d'entrée et d'affichage (11) étant conçu pour représenter les intensités d'éclairage des sources d'éclairage (3) chacune par un champ d'éclairage (19) correspondant à la source d'éclairage (3) concernée, l'intensité d'éclairage étant indiquée par une taille correspondante du champ d'éclairage (19) et/ou par une luminosité correspondante du champ d'éclairage (19) et/ou par un éclaircissement correspondant d'un arrière-plan représenté dans le champ d'éclairage (19) et/ou par une coloration correspondante du champ d'éclairage (19).

5. Dispositif de commande d'éclairage (10) selon l'une des revendications 1 à 4, les éléments de réglage (16) entourant les symboles de sources d'éclairage (13) au partiellement de manière circulaire, en forme de segment circulaire ou en forme de demi-cercle ou en forme d'arc de cercle.

6. Dispositif de commande d'éclairage (10) selon l'une des revendications 1 à 5, le dispositif d'entrée et d'affichage (11) étant réalisé séparément du dispositif de commande (10) et étant prévu plus particulièrement dans un PC tablette, un téléphone mobile ou un assistant numérique personnel.

7. Système d'éclairage pour un habitacle de passager (2) d'un véhicule automobile (1), comprenant :
- plusieurs sources d'éclairage (3) ;
- un dispositif de commande d'éclairage (10) selon l'une des revendications 1 à 6.
